# FASCICULE DE BREVET EUROPEEN

(11) **EP 0 707 200 B1**
(45) Date de publication et mention de la délivrance du brevet: **02.01.2003**
(21) Numéro de dépôt: 95402247.1
(22) Date de dépôt: 09.10.1995
(51) Int. Cl.: G01F 15/06

(54) **Procédé pour la mesure du débit d'un fluide et l'installation pour la mise en oeuvre de ce procédé**
Verfahren zur Messung der Durchflussrate einer Flüssigkeit und Vorrichtung zu seiner Durchführung
Method and device for measuring the flow rate of a fluid

(30) Priorité: 10.10.1994 FR 9412073
(43) Date de publication de la demande: 17.04.1996
(73) Titulaire: ETABLISSEMENTS FAURE-HERMAN, Courtaboeuf (Essonne) (FR)
(72) Inventeur: Denis, Michel, F-78370 Plaisir (Les Yvelines) (FR)
(74) Mandataire: Cabinet HERRBURGER

(56) Documents cités:
- EP-A- 0 458 995
- EP-A- 0 501 900
- FR-A- 2 640 747
- GB-A- 2 224 850

## Description

La présente invention concerne un procédé du type défini dans la revendication 1 et une installation telle que définie dans la revendication 3.

Les installations connues pour la mesure de débit d'un fluide comprennent un transmetteur relié à un ensemble électronique qui assure l'exploitation des informations de mesure transmises par le transmetteur.

Ce transmetteur se compose, schématiquement, d'une hélice montée à rotation à l'intérieur d'un corps, cette hélice étant pourvue d'un aimant qui engendre un signal dans un capteur fixé sur le corps de la turbine.

Ce signal dont la fréquence est proportionnelle à la vitesse d'écoulement du fluide, permet alors à l'ensemble électronique de déterminer la mesure de débit ou de toute autre mesure subséquente, par exemple quantitative, sous une forme volumique ou massique.

On sait que pour obtenir une mesure précise du débit d'un fluide, il est nécessaire de tenir compte d'un grand nombre de paramètres qui dépendent non seulement de la nature du fluide à mesurer et du calibre du transmetteur, mais aussi des caractéristiques propres de chaque transmetteur pour un même type, un même diamètre et un même fluide transmetteur, pourra présenter des paramètres de mesure différents suivant, par exemple, le couple des pivotages de l'hélice, le profil exact de l'hélice, son état de surface, la structure de toutes les pièces en contact avec le fluide, etc.

Ainsi, il est habituel de soumettre chaque transmetteur à des essais préalables, avant sa mise en service et de consigner, dans une mémoire, les caractéristiques de chaque turbine et de leur influence les unes sur les autres et en fonction de la valeur du débit, de la nature du fluide, de sa température, etc. afin que l'ensemble électronique puisse en tenir compte lors de l'exploitation des signaux de mesure.

Cette mémoire est soit disposée sur le transmetteur, soit incorporée dans un ensemble électronique mais aucune des deux solutions ne peut être considérée comme satisfaisante.

En effet, si la mémoire contenant les caractéristiques propres au transmetteur est fixée sur ce transmetteur, le transmetteur doit, dans ce cas, se trouver en permanence dans des conditions d'environnement et notamment de température et de rayonnement électromagnétique, compatibles avec les conditions de fonctionnement de sa mémoire, ce qui interdit dans de nombreux cas la mise en oeuvre de cette installation et, par exemple, sur les avions.

En outre, chaque transmetteur supporte individuellement le coût de cette électronique comportant la mémoire, ce qui devient très onéreux en cas de remplacement ou d'association de plusieurs transmetteurs.

Dans le cas où cette mémoire est intégrée dans l'ensemble électronique d'exploitation, à chaque intervention sur le transmetteur, (ce qui se traduit en général par son échange standard), il est nécessaire d'intervenir sur l'ensemble électronique afin de remplacer les caractéristiques de mesure de l'ancien transmetteur par celles du nouveau. Une telle opération est complexe et nécessite un personnel hautement spécialisé.

La présente invention a pour but de définir un procédé de mesure de débit de fluide qui soit d'un fonctionnement sûr, quelles que soient les conditions climatiques et le rayonnement électromagnétique ambiant, cette installation étant en outre d'un coût de fabrication et d'exploitation réduit par rapport aux installations existantes.

La présente invention concerne à cet effet un procédé pour la mesure du débit d'un fluide, selon la revendication 1, avec un transmetteur comportant une turbine dont l'hélice porte un aimant et un capteur détectant la rotation de l'hélice par le passage de l'aimant pour fournir un signal dont la fréquence est proportionnelle à la vitesse d'écoulement du fluide, et un ensemble de mesure pour exploiter les signaux produits par le transmetteur et donner un signal de débit volumique ou massique, caractérisé en ce qu'on insert les paramètres et caractéristiques du transmetteur dans une mémoire associée directement au transmetteur, on transfère ces paramètres et caractéristiques dans une mémoire de l'ensemble de mesure.

Suivant une autre caractéristique de l'invention, on effectue le transfert initial des caractéristiques du transmetteur par les fils conducteurs assurant ensuite le transfert, des signaux de mesure du transmetteur vers l'ensemble électronique.

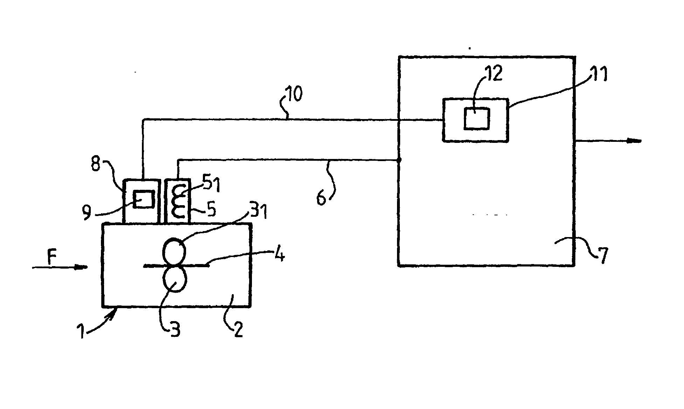

L'invention est représentée sur l'unique dessin ci-joint qui est une vue schématique illustrant le procédé de l'invention.

Sur l'unique dessin ci-joint, on a ainsi représenté un transmetteur 1 dont le corps 2 comporte une hélice 3 montée à rotation par son axe 4, afin de mesurer le débit du fluide qui s'écoule dans le corps 2 suivant le sens de la flèche F.

La vitesse de rotation de l'hélice, qui est proportionnelle à la vitesse d'écoulement du fluide et donc à son débit, est mesurée à partir d'un aimant 3₁ fixé sur une des pales de l'hélice et qui engendre à chaque tour de l'hélice un signal dans une bobine 5₁ d'un capteur 5 fixé sur le corps de ce transmetteur.

Ce signal est transmis par un conducteur, en général bifilaire 6, à l'ensemble de mesure 7 comprenant un calculateur qui exploite les signaux produits par le transmetteur,. par exemple afin d'afficher le débit ou la quantité volumique ou massique du fluide qui s'est écoulé, afin de stocker des informations et également afin d'intervenir sur les conditions de fonctionnement, par exemple d'un moteur d'avion, dans le but de réguler son fonctionnement.

Sur le corps 2 de ce transmetteur 1, est également fixé un circuit électronique, par exemple disposé à l'intérieur d'un boîtier 8, ce circuit comprend une mémoire 9 dans laquelle est stocké l'ensemble des paramètres et caractéristiques du transmetteur dont il faut tenir compte pour déterminer une mesure précise du débit du fluide. Ce boîtier 8 est également relié au calculateur 7, en général par une liaison bifilaire 10. A l'intérieur de cet ensemble 7, il est prévu un module de dialogue 11 avec le boîtier 8, ce module comportant une mémoire 12.

Suivant l'invention, cette installation est réalisée de façon que lors de la mise en service initiale du transmetteur ou avant chaque mesure, l'ensemble de dialogue Il interroge le circuit électronique du boîtier 8 et assure le transfert des informations contenues dans la mémoire 9 vers la mémoire 12. Après ce transfert, la liaison 10 avec le boîtier 8 est interrompue et l'exploitation des signaux provenant du capteur 5 est alors assurée en tenant compte des paramètres de mesure du transmetteur alors stockés dans la mémoire 12.

Ainsi, suivant l'invention, la mémoire 9 du circuit électronique du transmetteur constitue simplement une mémoire de stockage alors que la mémoire 12 constitue une mémoire de gestion et cette différentiation des fonctions des deux mémoires permet de disposer le transmetteur 1 avec son circuit électronique du boîtier 8 dans des conditions climatiques et de rayonnement électromagnétique compatibles avec une mémoire de stockage dont la fonction est uniquement de transférer les informations sans intervenir dans la gestion de la mesure, alors que l'exploitation des signaux produits par le transmetteur est effectuée en permanence au cours de la mesure en tenant compte des paramètres et caractéristiques du transmetteur transféré dans la mémoire 12.

Sur le dessin, le capteur 5 et le boîtier 8 sont chacun reliés par des conducteurs 6 et 10 à l'ensemble électronique 7. Conformément à l'invention il sera également possible d'assurer le transfert initial du contenu de la mémoire 9 dans la mémoire 12 à l'aide de la liaison bifilaire 6 assurant le transfert des signaux de mesure.

Dans ce cas, le circuit électronique 6 sera relié électroniquement au capteur 5 et l'ensemble du dialogue 11 déterminera tout d'abord le transfert du contenu de la mémoire 7 puis le transfert des signaux de mesure du capteur par la seule liaison 6.

## Revendications

1. Procédé de mesure de débit d'un fluide avec un transmetteur (1) comportant une turbine (2) dont l'hélice porte un aimant (3₁) et un capteur détectant la rotation de l'hélice par le passage de l'aimant pour fournir un signal dont la fréquence est proportionnelle à la vitesse d'écoulement du fluide,
et un ensemble de mesure (7) pour exploiter les signaux produits par le transmetteur et donner un signal de débit volumique ou massique,
**caractérisé en ce qu'**
- on insert les paramètres et caractéristiques du transmetteur (1) dans une mémoire (9) associée directement au transmetteur,
- on transfère (11) ces paramètres et caractéristiques dans une mémoire (12) de l'ensemble de mesure (7) et
- à la mise en service ou à chaque mesure, l'ensemble de dialogue (11) interroge la mémoire (9) du transmetteur (1) pour charger les paramètres et caractéristiques du transmetteur (1) dans la mémoire (12) puis couper la liaison avec la mémoire (9) et exploiter les signaux produits par le transmetteur en tenant compte des paramètres et caractéristiques du transmetteur.

2. Procédé conforme à la revendication 1, **caractérisé en ce qu'**on effectue le transfert initial des caractéristiques du transmetteur (1) par les fils conducteurs (6) assurant ensuite le transfert des signaux de mesure du transmetteur vers l'ensemble électronique.

3. Installation de mesure de débit d'un fluide comprenant
- un transmetteur (1) placé sur le site de mesure ayant une turbine (2) dont l'hélice est munie d'un aimant (3₁) et d'un capteur (5) détectant la rotation de l'hélice pour fournir un signal dont la fréquence est proportionnelle à la vitesse d'écoulement du fluide,
- un ensemble de mesure (7) placé sur le site d'exploitation comprenant un calculateur pour exploiter les signaux fournis par le transmetteur et donner un signal de débit volumique ou massique,
**caractérisé en ce que**
- le transmetteur (1) comporte une mémoire (9) contenant les paramètres et les caractéristiques du transmetteur,
- le calculateur relié en permanence au transmetteur (1) de l'ensemble de mesure (7) comporte un module de dialogue (11) avec une mémoire (12) pour recevoir les paramètres et caractéristiques du transmetteur (1) et
- l'ensemble de dialogue (11) est apte à interroger à la mise en service ou à chaque mesure la mémoire (9) du transmetteur (1) pour charger les paramètres et caractéristiques du transmetteur (1) dans la mémoire (12) puis couper la liaison avec la mémoire (9) et exploiter les signaux produits par le transmetteur en tenant compte des paramètres et caractéristiques du transmetteur.

## Patentansprüche

1. Verfahren zum Messen der Durchflussrate eines Fluids mit einem Übertrager (1), der eine Turbine (2), deren Schaufelrad einen Magneten (3₁) trägt, und einen Aufnehmer umfasst, der die Drehung des Schaufelrades durch den Durchgang des Magneten erfasst, um ein Signal zu liefern, dessen Frequenz proportional zur Strömungsgeschwindigkeit des Fluids ist, und einer Messanordnung (7) zum Verarbeiten der vom Übertrager erzeugten Signale und Liefern eines volumen- oder massenbezogenen Durchflussratensignals, **dadurch gekennzeichnet, dass**
- die Parameter und Eigenschaften des Übertragers (1) in einen Speicher (9) eingegeben werden, der direkt dem Übertrager zugeordnet ist,
- die Parameter und Merkmale in einen Speicher (12) der Messanordnung (7) übertragen (11) werden, und
- bei der Inbetriebnahme oder bei jeder Messung die Dialoganordnung (11) den Speicher (9) des Übertragers (1) abfragt, um die Parameter und Eigenschaften des Übertragers (1) in den Speicher (12) zu laden und dann die Verbindung mit dem Speicher (9) zu unterbrechen und die von dem Übertrager erzeugten Signale unter Berücksichtigung der Parameter und Eigenschaften des Übertragers zu verarbeiten.

2. Verfahren nach Anspruch 1, **dadurch gekennzeichnet, dass** die anfängliche Übertragung der Eigenschaften des Übertragers (1) über Leiterdrähte (6) durchgeführt wird, die anschließend die Übertragung der Messsignale vom Übertrager zu der elektronischen Anordnung gewährleisten.

3. Einrichtung zum Messen der Durchflussrate eines Fluids, mit:
- einem Übertrager (1), der am Messort angebracht ist und eine Turbine (2), deren Schaufelrad mit einem Magneten (3₁) versehen ist, und einen Aufnehmer (5) aufweist, der die Drehung des Schaufelrades erfasst, um ein Signal zu liefern, dessen Frequenz proportional zur Strömungsgeschwindigkeit des Fluids ist,
- einer Messanordnung (7), die am Ort der Auswertung angebracht ist und einen Rechner zum Auswerten der von dem Übertrager gelieferten Signale und zum Liefern eines volumen- oder massenbezogenen Durchflussratensignals umfasst,
**dadurch gekennzeichnet, dass**
- der Übertrager (1) einen Speicher (9) umfasst, der die Parameter und Eigenschaften des Übertragers enthält,
- der ständig mit dem Übertrager (1) verbundene Rechner der Messanordnung (7) ein Dialogmodul (11) für den Dialog mit einem Speicher (2) zum Empfangen der Parameter und Eigenschaften des Übertragers (1) umfasst,
- die Dialoganordnung (11) in der Lage ist, bei der Inbetriebnahme oder bei jeder Messung den Speicher (9) des Übertragers (1) abzufragen, um die Parameter und Merkmale des Übertragers (1) in den Speicher (12) zu laden und dann die Verbindung mit dem Speicher (9) zu unterbrechen und die von dem Übertrager erzeugten Signale unter Berücksichtigung der Parameter und Eigenschaften des Übertragers auszuwerten.

## Claims

1. Method of measuring a fluid flow rate with a transmitter (1) having a turbine (2), the propeller of which is fitted with a magnet (3₁), and a sensor detecting the rotation of the propeller from the magnet as it passes in order to supply a signal, the frequency of which is proportional to the flow velocity of the fluid,
and a measuring unit (7) to process the signals produced by the transmitter and output a signal representing flow volume or mass,
**characterised in that**
- the parameters and characteristics of the transmitter (1) are entered in a memory (9) directly connected to the transmitter,
- these parameters and characteristics are transferred (11) to a memory (12) of the measuring unit (7) and
- during service or on each measurement, the dialogue unit (11) queries the memory (9) of the transmitter (1) in order to load the parameters and characteristics of the transmitter (1) into the memory (12) and then cuts off the link with the memory (9) and processes the signals produced by the transmitter, taking account of the parameters and characteristics of the transmitter.

2. Method as claimed in claim 1, **characterised in that** the characteristics of the transmitter (1) are initially transferred by the conductor wires (6) which subsequently transfer measurement signals from the transmitter to the electronic unit.

3. Installation for measuring the flow rate of a fluid comprising
- a transmitter (1), positioned at the measurement location, having a turbine (2), the propeller of which is fitted with a magnet (3₁), and a sensor (5) detecting the rotation of the propeller in order to supply a signal, the frequency of which is proportional to the flow velocity of the fluid,
- a measuring unit (7) positioned at the processing location having a computer to process the signals supplied by the transmitter and output a signal representing flow volume or mass,
**characterised in that**
- the transmitter (1) has a memory (9) containing the parameters and characteristics of the transmitter,
- the computer, permanently linked to the transmitter (1) of the measuring unit (7), has a module for conducting a dialogue (11) with a memory (12) in readiness for receiving the parameters and characteristics of the transmitter (1) and
- during service or on each measurement, the dialogue unit (11) is programmed to query the memory (9) of the transmitter (1) in order to load the parameters and characteristics of the transmitter (1) into the memory (12) and then cut off the link with the memory (9) and process the signals produced by the transmitter taking account of the parameters and characteristics of the transmitter.
